# EUROPÄISCHE PATENTSCHRIFT

(11) **EP 4 045 356 B1**
(45) Veröffentlichungstag und Bekanntmachung des Hinweises auf die Patenterteilung: **01.01.2025**
(21) Anmeldenummer: 21714100.1
(22) Anmeldetag: 04.03.2021
(51) Int. Cl.: B60N 3/00, B64D 11/06

(54) **FLUGGASTSITZ UND SITZREIHE**
AIRCRAFT PASSENGER SEAT AND SEAT ROW
SIÈGE PASSAGER ET RANGÉE DE SIÈGES

(30) Priorität: 05.03.2020 DE 102020106031
(43) Veröffentlichungstag der Anmeldung: 24.08.2022
(73) Patentinhaber: ZIM Aircraft Seating GmbH, 88090 Immenstaad am Bodensee (DE)
(72) Erfinder: JENSEN, Alexander, 88046 Friedrichshafen (DE); DITTRICH, Marc, 88279 Amtzell (DE)
(74) Vertreter: Otten, Roth, Dobler & Partner mbB Patentanwälte
(86) Internationale Anmeldenummer: PCT/EP2021/055459
(87) Internationale Veröffentlichungsnummer: WO 2021/175990

(56) Entgegenhaltungen:
- EP-A1- 3 081 492
- US-A- 3 968 992
- US-A- 5 046 433
- US-A- 5 370 060
- US-A1- 2008 073 946
- US-A1- 2019 283 881

## Beschreibung

### Stand der Technik

Zur Ausstattung von Luftfahrzeugen zum Personentransport wie Passagierflugzeugen sind Fluggastsitze bzw. Sitzreihen mit üblicherweise mehreren Fluggastsitzen nebeneinander in einer Vielzahl von Ausführungsformen bekannt.

Bei der Konzeption der Fluggastsitze ist es erforderlich, dass eine hoher Nutz- und Bedienkomfort bereitgestellt wird, zum Beispiel mit verschiedenen Funktionen auf engstem Raum und unter Einhaltung von Sicherheitsstandards. Insbesondere ist eine flexible Anpassung der Funktionen bzw. deren Funktionselemente erwünscht.

Aus der EP 3 081 492 A1 ist beispielsweise ein Klapptisch zur Anbringung an einer Rückseite einer Rückenlehne eine Fluggastsitzes bekannt. Aus der US 2019/0283881 A1 ist ein Fluggastsitz mit einem in vertikaler Richtung verstellbarer Geräteträger bekannt. Der Träger für persönliche Geräte umfasst eine Trägerplatte, die in eine Rückseite des Passagiersitzes integriert ist, und eine Klappablageanordnung mit einer Basis, die einstellbar mit der Trägerplatte verbunden ist, um eine vertikale Bewegung der Klappablageanordnung relativ zur Trägerplatte zu ermöglichen.

### Aufgabe und Vorteile der Erfindung

Aufgabe der vorliegenden Erfindung ist es, einen verbesserten Fluggastsitz bereitzustellen, mit dem ein hoher Nutz- und Bedienkomfort flexibel erfüllbar ist.

Diese Aufgabe wird durch den unabhängigen Anspruch 1 gelöst.

Die Erfindung geht aus von einem Fluggastsitz umfassend ein Strukturbauteil, an welchem eine Tischplatte des Fluggastsitzes über eine Gelenkanordnung aufgenommen ist, wobei die Tischplatte um eine Schwenkachse der Gelenkanordnung schwenkbar ist.

Das Strukturbauteil gehört zu einer mechanisch tragenden Struktur des Fluggastsitzes, wie einer Grundstruktur des Fluggastsitzes. Beispielsweise ist die Grundstruktur als ein Sitz-Gestell vorhanden. Die tragende Struktur des Fluggastsitzes ist eine mechanisch tragende Grundstruktur. Die tragende Struktur des Fluggastsitzes ist z.B. ein starres Gestell des Fluggastsitzes z. B. bestehend aus mehreren mechanisch stabilen Gestell-Abschnitten bzw. Gestell-Elementen wie starren länglichen und/oder flächigen Bauteilen aus zum Beispiel einem Metallwerkstoff. Das Strukturbauteil ist vorzugsweise ein Teil des Gestells bzw. ist ein solches Gestell-Element. Die Gestell-Elemente sind in der Regel miteinander fest verbunden zu der Grundstruktur. Das Gestell bildet beispielsweise die mechanisch stabile räumliche bzw. am fertigen Fluggastsitz innenliegende Grundstruktur des Fluggastsitzes. Das Gestell mit dem Strukturbauteil ist in der Regel von außen am fertigen Fluggastsitz nicht sichtbar, beispielsweise durch eine Umhausung und/oder Polsterungen verdeckt. Das Gestell nimmt auf den Fluggastsitz mit der darin sitzenden Person wirkende Kräfte und/oder Momente auf und leitet diese in benachbarte Abschnitte wie z. B. einen Kabinenboden einer Flugkabine ein, in welcher der Fluggastsitz montiert ist, zum Beispiel angeschraubt an einem Boden der Flugkabine. An dem Gestell sind weitere Elemente des Fluggastsitzes montierbar wie Sitzboden-Polsterungen, Rückenlehnen-Polsterungen, Beinauflagen oder Anbauelemente wie die z. B. klappbare Tischplatte, Armlehnen oder Staufächer des Fluggastsitzes.

Der Kern der Erfindung liegt darin, dass eine Verbindungsanordnung zur lösbaren Anbringung der Tischplatte an dem Strukturbauteil vorgesehen ist, wobei die Verbindungsanordnung Einstellmittel umfasst zur Einstellung einer Montageposition der Tischplatte relativ zum Strukturbauteil, wobei die Einstellmittel derart ausgebildet sind, dass die Montageposition aus einer Mehrzahl unterschiedlicher Montagepositionen der Tischplatte relativ zum Strukturbauteil auswählbar ist. Damit ist eine Justierung der Tischplatte am Fluggastsitz möglich, insbesondere um die Tischplatte in eine exakte vorgegebene bzw. gewünschte Anbringposition und damit Nutzstellung zu bringen. Mit der Verbindungsanordnung und den Einstellmitteln ist die Tischplatte am Fluggastsitz, insbesondere rückseitig an dem Fluggastsitz, in die gewünschte Anbringposition am Fluggastsitz bringbar, vorzugsweise stufenlos oder in feinstufig sich unterscheidenden Verstellschritten. Die Einstellung der Anbringposition ist insbesondere in Millimeterschritten in der Position veränderbar bzw. einstell- bzw. verstellbar. Demgemäß unterscheiden sich benachbart mögliche Montage- bzw. Anbringpositionen um zum Beispiel circa einen oder mehrere Millimeter bzw. um wenige Winkelgrade, wenn es um eine Neigungseinstellung der Tischplatte im Nutzzustand geht.

Das Strukturbauteil ist insbesondere ein Bauteil, das sich im Bereich einer Rückenlehne des Fluggastsitzes erstreckt. An einer Grundstruktur sind zwei jeweils längliche plattenartige aufrecht stehende Strukturbauteile vorgesehen, die beidseitig im Bereich der Erstreckung der Rückenlehne des Fluggastsitzes vorhanden sind. Das Strukturbauteil weist eine Sandwich-Struktur auf, um bei geringem Gewicht eine hohe mechanische Stabilität zu erlangen. Die Grundstruktur des Fluggastsitzes umfasst zum Beispiel vorzugsweise zwei in einer Breitenrichtung des Fluggastsitzes horizontal beabstandete und vertikal sich in der Höhe des Fluggastsitzes erstreckende streifenförmige Strukturbauteile. An jedem der beiden, jeweils in einem seitlichen Bereich des Fluggastsitzes über die Höhe der Rückenlehne vorhandenen Strukturbauteile ist vorzugsweise eine Verbindungsanordnung zur lösbaren Anbringung der Tischplatte an den Strukturbauteilen vorgesehen. Denn die Tischplatte ist vorzugsweise an zwei Stellen gelenkig angebracht bzw. aufgehängt an dem Fluggastsitz. Die beiden Stellen betreffen zum Beispiel zwei Stellen an einer hinteren Längskante der Tischplatte. An einem ersten Plattenbauteil der Tischplatte ist in der Regel außerdem ein weiteres Plattenbauteil der Tischplatte bzw. eine Zusatz-Tischplatte gelenkig vorhanden, die heranklappbar und weg- bzw. aufklappbar ist relativ zum ersten Plattenbauteil, das am Strukturbauteil gelenkig angebracht ist.

Grundsätzlich ist eine gelenkige Anbringung der Tischplatte alternativ an genau einer Stelle bzw. mit genau einem Gelenk an genau einem Strukturbauteil denkbar.

Vorzugsweise ist die Tischplatte über zwei Anbring- bzw. Montagestellen, die an der Tischplatte zum Beispiel an einer rückwärtigen Stirnseite der Tischplatte vorhanden sind, mit dem Strukturbauteil verbunden. Bevorzugt an beiden Stellen ist die Einstellung der Montageposition vorzugsweise separat bzw. unabhängig von der Einstellung an der anderen Stelle möglich. Mit der Einstellung ist nicht nur die Montageposition fein justierbar bzw. genau einstellbar, sondern auch die räumliche Ausrichtung der Tischplatte. So kann die Tischplatte exakt am Fluggastsitz positioniert werden, so dass die Tischplatte in der Nutzstellung zum Beispiel in eine exakte Seiten-, Höhen und Horizontal-Ausrichtung der Tischplatte bringbar ist, z. B. mit der Flächenseite bzw. der mit der Tischplatte bereitstellbaren Abstellfläche gemäß einer Oberseite der Tischplatte in eine gewünschte Horizontal-Stellung. Dabei kann auch eine im Flugbetrieb herrschende, von der Horizontalen abweichende Neigung der Längsachse des Flugzeuges berücksichtigt werden, so dass über die überwiegende Flugdauer die Tischplatte mit ihrer Tischplatten-Fläche horizontal ausgerichtet ist. Damit ist sichergestellt, dass im Flugbetrieb auf der Tischplatte abgestellte Gegenstände nicht wegrutschen bzw. nicht herunterfallen.

Vorzugsweise ist die Tischplatte über zwei Anbringstellen, zum Beispiel im Bereich jeweils einer Gelenkanordnung zum Hoch- und Herunterklappen der Tischplatte an dem Fluggastsitz, mit je einer dazugehörigen Seite bzw. einem Strukturbauteil zum Beispiel innenseitig verbunden. Die gegenüberliegenden und horizontal beabstandeten Strukturbauteile bilden zum Beispiel zwei bodenabgestützte Vertikalstützen der Grundstruktur, die regelmäßig im oberen Endbereich der Strukturbauteile ein Querelement umfasst, das die beiden Strukturbauteile miteinander starr verbindet.

Vorteilhafterweise sind die Einstellmittel ausgebildet, die Montageposition der Tischplatte entlang einer ersten Verstellrichtung einzurichten und zusätzlich die Montageposition der Tischplatte entlang einer zweiten Verstellrichtung einzurichten, wobei die erste Verstellrichtung und die zweite Verstellrichtung zueinander winklig stehen. Vorzugsweise definieren die beiden Verstellrichtungen zwei Raumachsen, die rechtwinklig bzw. senkrecht zueinander stehen bzw. ausgerichtet sind. Die Verstellrichtungen umfassen vorzugsweise genau zwei Raumachsen bzw. Raumrichtungen oder drei Raumachsen, die zueinander senkrecht stehen. Zum Beispiel ist die erste Verstellrichtung eine senkrechte bzw. lotrechte Richtung und eine zweite Verstellrichtung ist eine horizontale Richtung. Eine dritte Verstellrichtung kann eine zur ersten horizontalen Richtung senkrecht stehende weitere horizontale Richtung sein.

Die Einstellung entlang der ersten Verstellrichtung betrifft zum Beispiel eine Höheneinstellung der Tischplatte, die Einstellung entlang der zweiten Verstellrichtung betrifft zum Beispiel eine Seiteneinstellung der Tischplatte und die Einstellung entlang der dritten Verstellrichtung betrifft zum Beispiel eine Tiefeneinstellung der Tischplatte.

Eine weitere Verstellrichtung betrifft eine Einstellung der Tischplatte um eine Achse, zum Beispiel für eine Neigungseinstellung der Tischplatte. Dabei wird ein gewünschter Nutzzustand der Tischplatte zugrundegelegt, vorzugsweise bezogen auf eine Neigung der Flugzeuglängsachse im Dauerflugbetrieb bei schräger Ausrichtung der Flugzeuglängsachse, die sich von der Ausrichtung der Längsachse am Boden oder im Sinkflug unterscheidet, da dann die Tischplatte in der Regel nicht genutzt wird.

Bei einer vorteilhaften Ausbildung der Einstellmittel, wonach die Tischplatte in drei Verstellrichtungen vorzugsweise jeweils unabhängig einstellbar ist, kann die Tischplatte optimal räumlich ausgerichtet werden, z. B. in einer Höhen-, in einer Seiten- und in einer Tiefenposition der Tischplatte relativ zum Strukturbauteil.

Vorzugsweise sind die Einstellmittel derart gestaltet, dass eine Einstellung der Neigung der Tischplatte in ihrer ausgeklappten Stellung möglich ist. Damit kann die Tischplatte mit ihrer Oberseite in eine horizontale Flächenausrichtung gebracht werden Damit wird im Flugbetrieb erreicht, dass auf der Tischplatte abgestellte Gegenstände wie Trinkgefäße und Geschirr nicht herunterrutschen können, da die Tischplatte horizontal steht.

Auch ist es von Vorteil, wenn die Tischplatte mit der Gelenkanordnung aus einer an dem Strukturbauteil herangeklappten Aufrecht-Stellung der Tischplatte in eine an dem Strukturbauteil vorstehende Nutzstellung der Tischplatte und zurück aus der Nutzstellung in die Aufrecht-Stellung schwenkbar ist, wobei die Einstellmittel Neigungseinstellmittel umfassen, welche für eine Einstellung der Neigung der Tischplatte in der Nutzstellung der Tischplatte ausgebildet sind.

Mit der Gelenkanordnung kann die Tischplatte bei Nichtnutzung an zum Beispiel die Rückseite des Fluggastsitzes bzw. an eine Rückseite einer Umhausung des Fluggastsitzes herangeklappt werden. Dann ist die Tischplatte platzsparend untergebracht bzw. mit ihren Flächenseiten vertikal ausgerichtet und ragt nicht z. B. störend hinein in einen Bewegungsraum einer hinter dem Fluggastsitz sitzenden Person, welche die Tischplatte in der Nutzstellung nutzt. Hierfür wird die Tischplatte aus der zum Beispiel nach oben geklappten Aufrecht-Stellung in die Nutzstellung herabgeklappt.

Mit den Neigungseinstellmitteln ist bei am Fluggastsitz rückseitig abstehender Tischplatte in der Nutzstellung eine flächige Nutzseite der Tischplatte bzw. eine Oberseite der Tischplatte in der Neigung vorzugsweise in eine gewünschte angenähert oder exakt horizontale Ausrichtung bringbar, bezogen auf eine ausgewählte Ausrichtung bzw. Neigung des Fluggastsitzes bzw. dessen Höhenachse. Die Ausrichtung der Höhenachse des Fluggastsitzes eines sich am Boden befindlichen Passagierflugzeuges weicht von der Ausrichtung der Höhenachse des Fluggastsitzes im Flugbetrieb des Passagierflugzeuges ab. Davon abhängig ist auch die Ausrichtung der abgeklappten Tischplatte in der Nutzstellung. Dabei ist es gewünscht, dass in der Nutzstellung die Oberseite der Tischplatte parallel zur Horizontalen ausgerichtet ist. Diese Ausrichtung im Nutzzustand ist vorteilhaft bezogen auf den Flugbetrieb des dazugehörigen Passagierflugzeugs. Dabei ist ein Flugkabinenboden, auf dem der Fluggastsitz montiert ist, in der Regel winklig zur Horizontalen ausgerichtet in Sitzrichtung bzw. nach vorne ansteigend. Vorteilhafterweise ist es mit den Neigungseinstellmittel möglich dass auf der Tischplatte abgestellte Gegenstände wie Trinkgefäße oder Geschirr wie ein Teller stabil auf der Oberseite der Tischplatte abstellbar sind.

Eine vorteilhafte Abwandlung der Erfindung zeigt sich darin, dass die Einstellmittel Höheneinstellmittel umfassen, welche für eine Einstellung einer Höhen-Montageposition der Tischplatte entlang einer vertikalen Verstellrichtung ausgestaltet sind.

Die vertikale Verstellrichtung ist bezogen auf einen Einbauzustand der Tischplatte am Fluggastsitz. Mit der vertikalen Verstellrichtung lässt sich eine gewünschte Höhenposition anpassen z. B. an eine jeweils gewünschte Position entlang der Senkrechten bzw. bezogen auf zum Beispiel einen Abstand vom Flugkabinenboden zur Tischplatte.

Weiter ist es von Vorteil, dass die Einstellmittel Seiteneinstellmittel umfassen, welche für eine Einstellung einer Seiten-Montageposition der Tischplatte entlang einer horizontalen Verstellrichtung ausgestaltet sind.

Mit den Seiteneinstellmittel ist eine exakte laterale Ausrichtung zum Beispiel in Breitenrichtung bzw. quer zur Sitzrichtung bzw. mittig am Fluggastsitz bzw. beispielsweise zwischen zwei Strukturbauteilen des Fluggastsitzes möglich.

Es ist überdies vorteilhaft, dass die Einstellmittel eine Schraubverbindung umfassen mit einem durch ein Langloch greifenden Schraubelement, das in einen Gewindeabschnitt einschraubbar ist.

Die Schraubverbindung stellt eine stabile und platzsparende Möglichkeit zur Einstellung der Montageposition dar. Außerdem ist mit der Schraubverbindung vorteilhaft neben der Einstellung der Montageposition gleichzeitig die Anbringung der Verbindungsanordnung am Strukturbauteil und/oder der Tischplatte und/oder von Elementen der Verbindungsanordnung miteinander einrichtbar.

Die jeweilige Schraubverbindung umfasst vorteilhaft genau zwei Schraubelemente mit jeweiligem Schraubloch.

Gemäß einer vorteilhaften Modifikation umfasst die Verbindungsanordnung mehrere Verbindungsbauteile, wobei ein erstes Verbindungsbauteil an dem Strukturbauteil befestigt ist und das erste Verbindungsbauteil mit einem zweiten Verbindungsbauteil der Verbindungsanordnung verbunden ist.

Damit ist die Anbringung der Verbindungsanordnung am Strukturbauteil einfach bzw. in wenigen Schritten möglich.

Für die Befestigung des ersten Verbindungsbauteils sind zum Beispiel geeignete Abschnitte an dem ersten Verbindungsbauteil selbst und am Strukturbauteil entsprechend vorbereitet vorhanden zum Beispiel mit Öffnungen für z.B. Nietelemente oder mit Anschrauböffnungen mit einem Innengewinde für dazu passende Schraubmittel mit Außengewinde.

Die mehreren Verbindungsbauteile der Baueinheit sind bevorzugt mit Schraubmitteln miteinander verbunden. Vorzugsweise greift jedes Schraubelement durch ein zugehöriges Langloch im ersten Verbindungsbauteil.

Demgemäß ist es vorteilhaft, wenn am ersten Verbindungsbauteil und/oder am zweiten Verbindungsbauteil Verbindungsmittel realisiert sind zur Verbindung des zweiten Verbindungsbauteils mit dem ersten Verbindungsbauteil. Diese Verbindungsmittel sind vorzugsweise Schraubmittel.

Vorzugsweise sind die Verbindungsbauteile den Einstellmitteln zugehörig bzw. bilden die Verbindungsbauteile die Verbindungsanordnung und gleichzeitig die Einstellmittel.

Ein anderer Vorteil ergibt sich, wenn das zweite Verbindungsbauteil mit der Gelenkanordnung verbunden ist.

Vorzugsweise greift das zweite Verbindungsbauteil an der Gelenkanordnung an.

Vorzugsweise sind das zweite Verbindungsbauteil und die Gelenkanordnung miteinander mit einer Schraubverbindung verbunden. Vorzugsweise mit genau zwei Schraubelementen wie Schrauben mit einem Fein-Außengewinde, die in zwei dazugehörige Schraubbohrungen mit Fein-Innengewinde greifen.

Die Schraubmittel greifen durch jeweils ein Langloch am zweiten Verbindungsbauteil.

Die Längserstreckung der z. B. zwei Langlöcher im ersten Verbindungsbauteil sind vorzugsweise parallel untereinander.

Die Längserstreckung der z. B. zwei Langlöcher im zweiten Verbindungsbauteil sind vorzugsweise parallel untereinander.

Die Längserstreckung der Langlöcher im ersten Verbindungsbauteil ist vorzugsweise senkrecht zur Längserstreckung der Langlöcher im zweiten Verbindungsbauteil.

Weiter besteht eine vorteilhafte Ausgestaltung darin, dass die Höheneinstellmittel eine Schraubverbindung umfassen mit einem ersten Schraubelement, das durch ein erstes Langloch greift und einem zweiten Schraubelement, das durch ein zweites Langloch greift. Dies stellt eine stabile Höheneinstellung dar.

Nachfolgend sind vorteilhafte bzw. vorzugsweise gestaltete Ausbildungen diskutiert, die nicht einschränkend sind bzw. die neben anderen möglichen Varianten stehen.

Ein jeweiliges Langloch bzw. die paarweise zusammengehörigen beiden Langlöcher der Höheneinstellmittel weisen vorzugsweise keine Innengewinde auf, da die Langlöcher zum Durchgreifen des jeweiligen Schraubelements dienen, jedoch nicht zum Zusammenwirken mit dem Außengewinde des Schraubelements. In Durchgreifrichtung hinter dem Abschnitt mit dem Langloch bzw. dem dahinter anschließenden Bauteilabschnitt ist jedoch vorzugsweise ein Innengewinde vorhanden, in welches das Außengewinde des Schraubelements passend einschraubbar ist.

Die zur Höheneinstellung, wie auch die zur Seiteneinstellung gehörigen beiden Langlöcher, vorgesehenen paarweisen Langlöcher sind auf ein Langloch-Paar bezogen separat bzw. getrennt voneinander. Das jeweilige Schraubelement ist jeweils in einen passenden Gewindeabschnitt, der im Bauteil hinter dem Langloch in Durchgreifrichtung vorhanden ist, einschraubbar. Das Einschrauben des Schraubelements erfolgt so weit, bis der Abschnitt bzw. das Bauteil mit Langloch geklemmt wird und in seiner Position fixiert ist durch das Schraubelement und das Bauteil mit dem Innengewinde. Die zwei Schraubelemente, die zu einem Langloch-Paar gehören, sind wie die Langlöcher nebeneinander versetzt zueinander, vorzugsweise vertikal versetzt, bei der Seiteneinstellung horizontal bzw. lateral versetzt zueinander.

Beispielsweise sind am ersten Verbindungsbauteil das erste und das zweite Langloch der Höheneinstellmittel ausgebildet, durch welches das jeweils dazugehörige Schraubelement greift. Ein jeweiliger Gewindeabschnitt für die jeweiligen beiden Schraubelemente ist vorzugsweise im zweiten Verbindungsbauteil vorhanden.

Nach einem Vorteil der Erfindung umfassen die Seiteneinstellmittel eine Schraubverbindung mit einem ersten Schraubelement, das durch ein erstes Langloch greift und einem zweiten Schraubelement, das durch ein zweites Langloch greift.

Die Seiteneinstellmittel mit der Schraubverbindung umfasst neben den Schraubelementen und den Langlöchern außerdem jeweils einen ersten Innengewindeabschnitt in einem ersten Loch und einen zweiten Innengewindeabschnitt in einem zweiten Loch, jeweils in einem Bauteil hinter dem zweiten Verbindungsbauteil wie vorzugsweise einem Gelenkteil der Gelenkanordnung.

Die ohne Innengewinde versehenen Langlöcher sind separat bzw. getrennt voneinander. Am zweiten Einstellbauteil ist ein Langloch der Seiteneinstellmittel ausgebildet, durch welches das dazugehörige Schraubelement greift. Ein jeweiliger Gewindeabschnitt für die beiden Schraubelemente ist vorzugsweise in einem Gelenkbauteil der Gelenkanordnung ausgebildet. Die Innengewindeabschnitte von Höhen- und von Seiteneinstellmittel sind vorzugsweise parallel ausgerichtet bzw. demgemäß die Längsachse der jeweiligen Schraubelemente.

Das erste Langloch und das zweite Langloch der Höheneinstellmittel und das erstes Langloch der Seiteneinstellmittel sind jeweils separate Langlöcher.

Entsprechend sind die beiden Langlöchern der Seiteneinstellmittel jeweils separate parallele Langlöcher.

Weiter ist es von Vorteil, dass die Neigungseinstellmittel ein Schraubelement umfassen, wobei durch Verdrehen des Schraubelements eine Verstellung eines Teils der Gelenkanordnung um die von der Gelenkanordnung bereitgestellte Schwenkachse bedingt. Damit lässt sich einfach und stufenlos beispielsweise mit einem Schraubendreh-Werkzeug die Neigung der Tischplatte in der Nutzstellung einrichten.

Bevorzugt ist die Tischplatte des Fluggastsitzes mit zwei Verbindungsanordnungen lösbar an zwei voneinander beabstandeten Strukturbauteilen angebracht. Damit wird eine mechanisch stabile Zweipunkt-Anbringung bzw. -Aufhängung der Tischplatte realisiert Vorzugsweise ist an beiden Anbringpunkten eine Gelenkanordnung zum Klappen der Tischplatte realisiert.

Vorzugsweise findet die Befestigung an einander zugewandten Innen- bzw. Flächenseiten der Strukturbauteile statt. Die Tischplatte umfasst vorzugsweise ein erstes an dem Strukturbauteil angreifendes Plattenbauteil und ein weiteres Plattenbauteil wie z. B. eine Zusatz-Tischplatte, das gelenkig am ersten Plattenbauteil angreift. Das weitere Plattenbauteil kann an das erste Plattenbauteil an dieses parallel herangeklappt oder flächig fluchtend daran verlängernd vorhanden sein. Damit kann die nutzbare Abstell-Fläche eines Tisches umfassend die Tischplatte vergrößert werden. Außerdem kann das weitere Plattenbauteil bei dessen Nichtnutzung, bei Nutzung der Tischplatte kompakt angeklappt werden an z. B. die Oberseite des ersten Plattenbauteils.

Die Erfindung erstreckt sich zudem auf eine Sitzreihe umfassend mehrere nebeneinander vorhandene Fluggastsitze gemäß einer der oben beschriebenen Ausbildungen. Damit lassen sich die diskutierten Vorteil an einer Sitzreihe mit mehreren Fluggastsitzen in einem Flugzeug erreichen. Die Fluggastsitze sind vorzugsweise lateral fluchtend zueinander vorhanden im Flugzeug.

Ein Sitzplatz eines Fluggastsitzes weist für ein bequemes Sitzgefühl eines Fluggastes einen vorzugsweise gepolsterten Sitzboden und eine Rückenlehne mit Polsterung auf. In einem Flugzeug sind regelmäßig zwei oder mehr Fluggastsitze fluchtend nebeneinander zu einer Sitzreihe verbunden.

### Figurenbeschreibung

Nachfolgend sind weitere Merkmale und Vorteile der Erfindung anhand eines schematisch dargestellten Ausführungsbeispiels näher erläutert.

Im Einzelnen zeigt:
- Fig. 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Fig. 2: die Sitzreihe gemäß Figur 1 in einer perspektivischen Ansicht von schräg hinten,
- Fig. 3: eine Grundstruktur der Fluggastsitze gemäß Fig. 1 und 2 perspektivisch schräg von vorne mit jeweils einer Tischplatte in Nutzstellung,
- Fig. 4: einen vergrößerten Ausschnitt gemäß dem umrandeten Bereich A in Fig. 3,

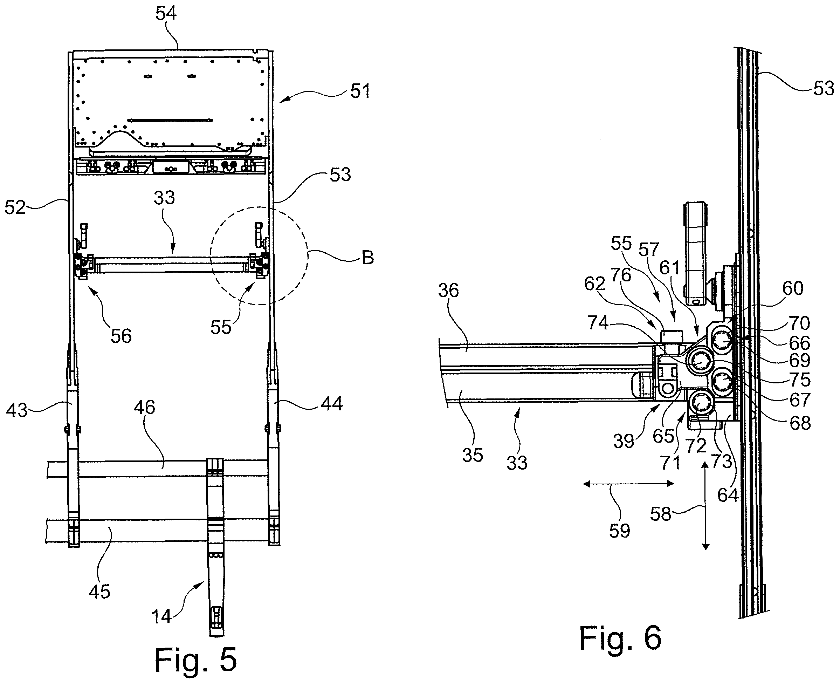

- Fig. 5: einen Ausschnitt der Grundstruktur der Fluggastsitze gemäß Fig. 3 in einer Frontansicht und
- Fig. 6: einen vergrößerten Ausschnitt gemäß dem umrandeten Bereich B in Fig. 5.

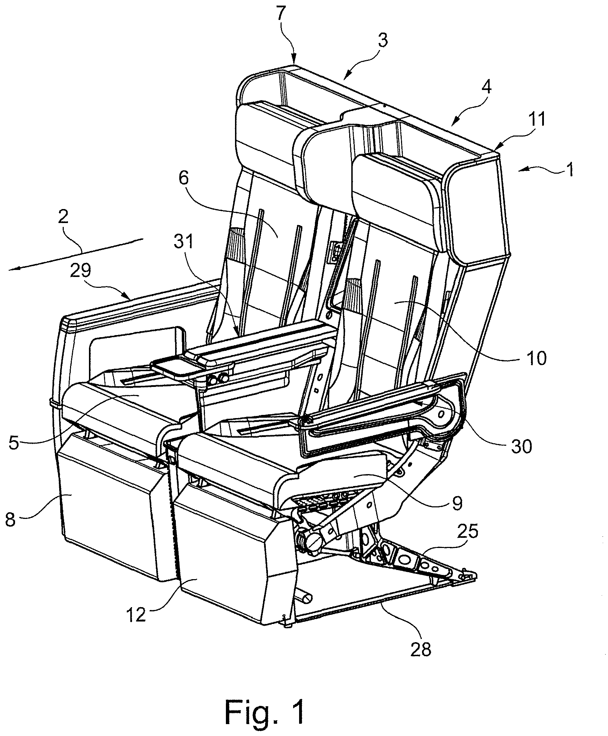

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

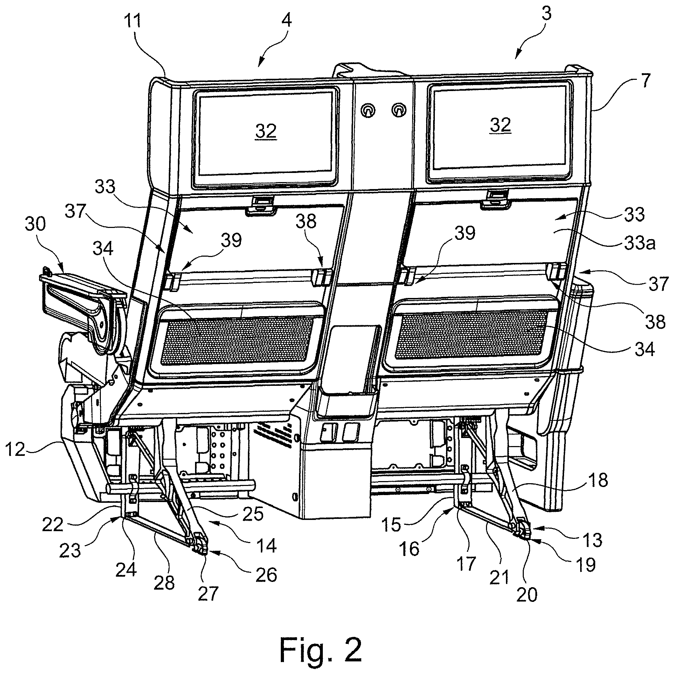

In einem unterhalb an die Multimedia-Einheit 32 anschließenden bzw. mittleren Bereich ist zum Beispiel jeweils eine klappbare Tischplatte 33 für den jeweiligen Fluggastsitz 3 und 4 wie ein Tablett-Tisch ausgebildet. In Fig. 2 sind die Tischplatten 33 in einer nach oben herangeklappten, vertikal stehenden und gesicherten Verstau- bzw. Nichtnutzungs-Stellung dargestellt.

Unterhalb der jeweiligen klappbaren Tischplatte 33 ist ein oben offenes Staufach mit einer flexiblen Netzabdeckung 34 beispielswiese zur Unterbringung von Zeitschriften bzw. Prospekten oder anderen Gegenständen vorhanden.

Nachfolgend wird die Tischplatte 33 mit Bezug auf den Fluggastsitz 3 näher erläutert, wobei die Tischplatte 33 am Fluggastsitz 4 identisch aufgebaut ist.

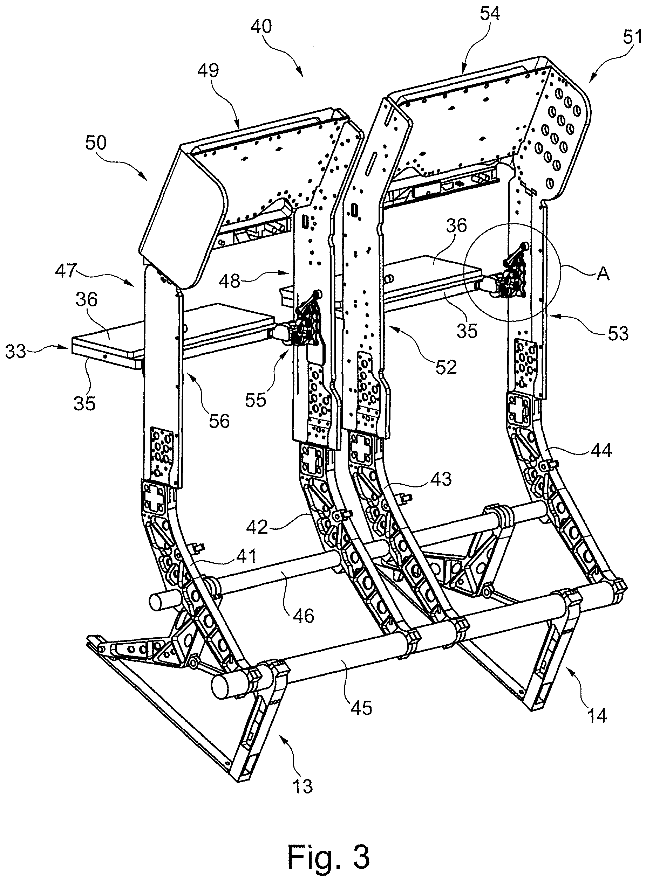

Die Tischplatte 33, die eine in Fig. 2 ersichtliche, außenseitig vorhandene flächige Überdeckung 33a wie zum Beispiel ein dünnes Abdeckelement aufweist, umfasst zwei gelenkig verbundene Plattenbauteile mit einem ersten Plattenbauteil 35 und einem zweiten Plattenbauteil 36 (s. Fig. 3), das als Zusatz-Tischplatte dient zur wahlweisen Vergrößerung einer nutzbaren Tischfläche der Tischplatte 33. Zur schwenk- bzw. klappbaren Anordnung der Tischplatte 33 am Fluggastsitz 3 bzw. 4 ist jeweils eine Gelenkanordnung mit einem Beschlag 37 vorhanden, umfassend ein Beschlagteil 38 und ein weiteres Beschlagteil 39.

Fig. 3 zeigt eine Grundstruktur 40 bzw. hier beispielhaft ein Sitzgestell der Fluggastsitze 3, 4 gemäß Fig. 1 und 2. Rückseitig an der Grundstruktur 40 sind die zwei Tischplatten 33 in einer horizontal stehenden, aus der Aufrecht-Stellung gemäß Fig. 2 herabgeklappten Nutzstellung dargestellt, die jedem der beiden Fluggastsitze 3, 4 gemäß der Fig. 1 und 2 zugehörig sind.

Die Grundstruktur 40 ist vorzugsweise als eine tragende Struktur für die beiden Fluggastsitze 3, 4 ausgebildet. Die Grundstruktur 40 ist insbesondere mechanisch stabil bzw. als lastaufnehmende Grundstruktur 40 ausgebildet mit einem im Wesentlichen starren Aufbau. Die Elemente der Grundstruktur 40 sind zum Beispiel aus einem metallischen Material wie einem Leichtmetall zum Beispiel auf Basis eines Aluminium-Werkstoffes gebildet.

Die mit der Grundstruktur 40 gebildeten Fluggastsitze 3, 4 sind über die Grundstruktur 40 an z. B. einem Kabinenboden einer Fluggastkabine fest anordenbar zum Beispiel anschraubbar. Die Grundstruktur 40 umfasst insbesondere mehrere hier z. B. vier Sitzteiler 41 bis 44, und quer zur Sitzrichtung verlaufende Holme 45, 46 mit dem vorderen Holm 45 und dem in Sitzrichtung 2 gesehen dahinter angeordneten hinteren Holm 46. Die Holme 45, 46 sind zylindrische Profile mit jeweils unterschiedlichem Durchmesser.

Vorzugsweise sind beide Holme 45, 46 an den Sitzteilern 41-44 angeordnet bzw. es ragen beide Holme 45, 46 in deren Längsrichtung bzw. mit deren Längsachse durch jeweilige vertikal flächig ausgerichtete Flächenseiten der Sitzteiler 41-44 hindurch.

Vorteilhafterweise verlaufen die zwei Holme 45, 46 beabstandet, insbesondere mehrheitlich parallel zueinander ausgerichtet. Vorteilhafterweise sind die Holme 45, 46 horizontal ausgerichtet.

Die Grundstruktur 40 umfasst eine zum Fluggastsitz 3 gehörige Strukturbaugruppe 50 und eine zum Fluggastsitz 4 gehörige weitere Strukturbaugruppe 51.

Die Strukturbaugruppe 50 umfasst ein Verbindungs-Strukturbauteil 49 und zwei Strukturbauteile 47 und 48, deren jeweiliger oberer Endabschnitt über das Verbindungs-Strukturbauteil 49 verbunden sind, wobei das Verbindungs-Strukturbauteil 49 einen horizontalen Abstand zwischen den beiden Strukturbauteile 47 und 48 überbrückt. Die beiden Strukturbauteile 47 und 48 sind mit den Sitzteilern 41 und 42 an deren jeweiligen oberen Ende lösbar aber fest verbunden.

Die beiden Strukturbauteile 47 und 48 sind in ihrem oberen Endabschnitt, der gegenüber dem unteren Abschnitt etwas breiter ist, räumlich schräg nach vorne leicht abgewinkelt gestaltet.

Die Strukturbaugruppe 50 umspannt den Bereich, in welchem am fertigen Fluggastsitz 3 die Rückenlehne 6 vorhanden ist.

Die Strukturbauteile 47, 48 sind vorzugsweise flache plattenartige schmale Bauteile aus zum Beispiel einer wabenartigen bzw. mit inneren Hohlräumen versehenen Sandwich-Struktur, vorzugsweise mit einer inneren Wellen-Tal-Struktur und beidseitiger Abdeckung durch jeweils ein dünnes flächiges Abdeckelement wie z. B. aus einem Leichtmetall-Blech.

Für die gleichartig zur Strukturbaugruppe 50 aufgebaute Strukturbaugruppe 51 gilt das zur Strukturbaugruppe 50 Gesagte entsprechend.

Die Strukturbaugruppe 51 umfasst ein Verbindungs-Strukturbauteil 54 und zwei Strukturbauteile 52 und 53, deren jeweiliger oberer Endabschnitt über das Verbindungs-Strukturbauteil 54 verbunden sind, wobei das Verbindungs-Strukturbauteil 54 einen horizontalen Abstand zwischen den beiden Strukturbauteilen 52 und 53 überbrückt. Die beiden Strukturbauteile 52 und 53 sind mit den Sitzteilern 43 und 44 an deren jeweiligen oberen Ende lösbar aber fest verbunden.

Zur lösbaren Anbringung der jeweiligen Tischplatte 33 an zumindest einem der Strukturbauteile 47, 48 bzw. 52, 53 vorzugsweise an beiden Strukturbauteile 47, 48 bzw. 52, 53 ist eine Verbindungsanordnung vorgesehen.

Im dargestellten Ausführungsbeispiel sind zwei Verbindungsanordnungen 55 und 56 für jede der beiden Tischplatten 33 vorgesehen. Jede Verbindungsanordnung 55 und 56 weist Einstellmittel 57 zur Einstellung einer Montageposition der Tischplatte 33 relativ zum dazugehörigen Strukturbauteil 47, 48 bzw. 52, 53 auf.

Die Einstellmittel 57 sind ausgebildet, die Montageposition der Tischplatte 33 entlang einer ersten Verstellrichtung 58 und zusätzlich entlang einer zweiten Verstellrichtung 59 einzurichten, wobei die erste Verstellrichtung 58und die zweite Verstellrichtung 59 zueinander winklig stehen, hier senkrecht aufeinander stehen. Die Einstellmittel 57 umfassen Höheneinstellmittel 60, Seiteneinstellmittel 61 und Neigungseinstellmittel 62.

Mit den Höheneinstellmitteln 60 erfolgt eine Einstellung der Montageposition der Tischplatte 33 in die erste Verstellrichtung 58 bzw. in die vertikalen Verstellrichtung 58, die demgemäß eine Höhen-Verstellrichtung ist.

Mit den Seiteneinstellmitteln 61 erfolgt eine Einstellung der Montageposition der Tischplatte 33 in die zweite Verstellrichtung 59 bzw. in die horizontale Verstellrichtung 59, die demgemäß eine Seiten-Verstellrichtung ist.

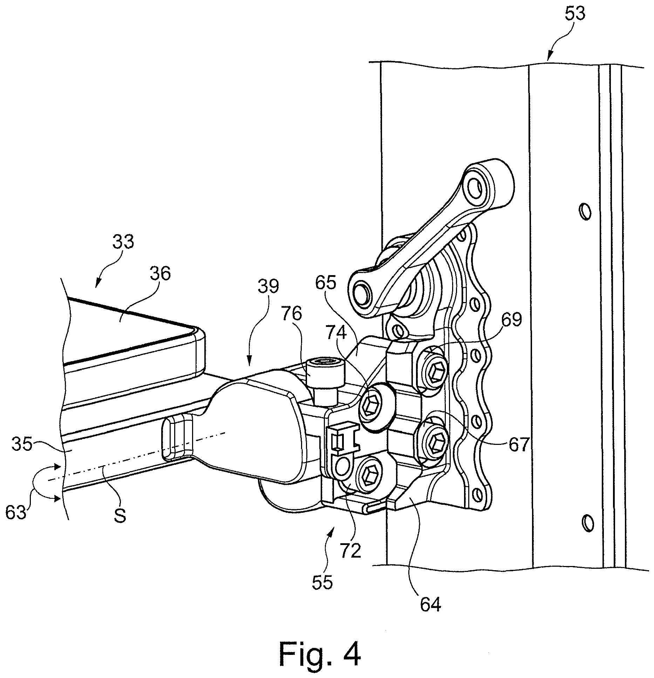

Mit den Neigungseinstellmitteln 62 erfolgt in der Tischplatten-Nutzstellung eine Einstellung der Neigung der Tischplatte 33 in einer Neigungsrichtung 63 um eine Gelenkachse des jeweiligen Beschlagteils 38, 39 also um die von der Gelenkanordnung mit dem Beschlag 37 bereitgestellten Schwenkachse S der Tischplatte 33 (s. Fig. 4).

Bezogen auf die Verbindungsanordnung 55, wobei die weitere Verbindungsanordnung 56 entsprechend gestaltet ist, umfasst die Verbindungsanordnung 55 mehrere Verbindungsbauteile, wobei ein erstes Verbindungsbauteil 64 an dem Strukturbauteil 53 befestigt ist und das erste Verbindungsbauteil 64 mit einem zweiten Verbindungsbauteil 65 der Verbindungsanordnung 55 verbunden ist.

Das zweite Verbindungsbauteil 65 ist mit dem Beschlagteil 39 der Gelenkanordnung verbunden.

Die Höheneinstellmittel 60 umfassen eine Schraubverbindung 66 mit einem ersten Schraubelement 67, das durch ein erstes Langloch 68 im Verbindungsbauteil 64 greift und einem zweiten Schraubelement 69, das durch ein zweites Langloch 70 im Verbindungsbauteil 64 greift. Mit dem von der Langlochlänge der Langlöcher 68, 70 abhängigen Verstellbereich und der variabel wählbaren Durchgriffposition der Schraubelemente 67, 69 ist die Höhenposition der Tischplatte 33 einstellbar.

Die Seiteneinstellmittel 61 umfassen eine Schraubverbindung 71 mit einem ersten Schraubelement 72, das durch ein erstes Langloch 73 im Verbindungsbauteil 65 greift und einem zweiten Schraubelement 74, das durch ein zweites Langloch 75 im Verbindungsbauteil 65 greift.

Die Neigungseinstellmittel 62 umfassen eine Schraubanordnung mit einem Schraubelement 76, das durch Verdrehen eine Verstellung gemäß der Verstell-bzw. Neigungsrichtung 63 eines Teils der Gelenkanordnung um die von der Gelenkanordnung bereitgestellten Schwenkachse S bedingt im Nutzstellung der Tischplatte 33.

### Bezugszeichenliste

| | | | |
|---|---|---|---|
| 1 | Sitzreihe | 35, 36 | Plattenbauteil |
| 2 | Sitzrichtung | 37 | Beschlag |
| 3 | Fluggastsitz | 38, 39 | Beschlagteil |
| 4 | Fluggastsitz | 40 | Grundstruktur |
| 5 | Sitzboden | 41-44 | Sitzteiler |
| 6 | Rückenlehne | 45, 46 | Holm |
| 7 | Umhausung | 47, 48 | Strukturbauteil |
| 8 | Beinauflage | 49 | Verbindungs- |
| 9 | Sitzboden | | Strukturbauteil |
| 10 | Rückenlehne | 50 | Strukturbaugruppe |
| 11 | Umhausung | 51 | Strukturbaugruppe |
| 12 | Beinauflage | 52, 53 | Strukturbauteil |
| 13 | Stützbein | 54 | Verbindungs- |
| 14 | Stützbein | | Strukturbauteil |
| 15 | Strebe | 55, 56 | Verbindungsanordnung |
| 16 | Endbereich | 57 | Einstellmittel |
| 17 | Montagestelle | 58, 59 | Verstellrichtung |
| 18 | Strebe | 60 | Höheneinstellmittel |
| 19 | Endbereich | 61 | Seiteneinstellmittel |
| 20 | Montagestelle | 62 | Neigungseinstell- |
| 21 | Verstrebungselement | | mittel |
| 22 | Strebe | 63 | Neigungsrichtung |
| 23 | Endbereich | 64, 65 | Verbindungsbauteil |
| 24 | Montagestelle | 66 | Schraubverbindung |
| 25 | Strebe | 67 | Schraubelement |
| 26 | Endbereich | 68 | Langloch |
| 27 | Montagestelle | 69 | Schraubelement |
| 28 | Verstrebungselement | 70 | Langloch |
| 29 | Armlehne | 71 | Schraubverbindung |
| 30 | Armlehne | 72 | Schraubelement |
| 31 | Konsole | 73 | Langloch |
| 32 | Multimedia-Einheit | 74 | Schraubelement |
| 33 | Tischplatte | 75 | Langloch |
| 33a | Überdeckung | 76 | Schraubelement |
| 34 | Staufach | | |

## Patentansprüche

1. Fluggastsitz (3, 4) umfassend ein Strukturbauteil (47, 48, 52, 53), an welchem eine Tischplatte (33) des Fluggastsitzes (3, 4) über eine Gelenkanordnung aufgenommen ist, wobei die Tischplatte (33) um eine Schwenkachse der Gelenkanordnung schwenkbar ist, wobei der Fluggastsitz (3, 4) eine Grundstruktur aufweist, wobei die Grundstruktur eine mechanisch tragende Struktur ist, wobei die Grundstruktur das Strukturbauteil (47, 48, 52, 53) aufweist, wobei die Grundstruktur zwei jeweils längliche plattenartige aufrecht stehende Strukturbauteile aufweist, welche beidseitig im Bereich der Erstreckung einer Rückenlehne des Fluggastsitz vorhanden sind, wobei die Strukturbauteile eine Sandwich-Struktur aufweisen, um bei geringem Gewicht eine hohe mechanische Stabilität zu erlangen, wobei eine Verbindungsanordnung (55, 56) zur lösbaren Anbringung der Tischplatte (33) an dem Strukturbauteil (47, 48, 52, 53) vorgesehen ist, wobei die Verbindungsanordnung (55, 56) Einstellmittel (57) umfasst zur Einstellung einer Montageposition der Tischplatte (33) relativ zum Strukturbauteil (47, 48, 52, 53), wobei die Einstellmittel (57) derart ausgebildet sind, dass die Montageposition aus einer Mehrzahl unterschiedlicher Montagepositionen der Tischplatte (33) relativ zum Strukturbauteil (47, 48, 52, 53) auswählbar ist, wobei die Tischplatte (33) des Fluggastsitzes (3, 4) mit einer Verbindungsanordnung (56) lösbar an einem ersten der zwei Strukturbauteilen (47, 52) und mit einer weiteren Verbindungsanordnung (55) lösbar an einem zweiten der zwei Strukturbauteile (48, 53) angebracht ist.

2. Fluggastsitz nach Anspruch 1, **dadurch gekennzeichnet, dass** die Einstellmittel (57) ausgebildet sind, die Montageposition der Tischplatte (33) entlang einer ersten Verstellrichtung (58) einzurichten und zusätzlich die Montageposition der Tischplatte (33) entlang einer zweiten Verstellrichtung (59) einzurichten, wobei die erste Verstellrichtung (58) und die zweite Verstellrichtung (59) zueinander winklig stehen.

3. Fluggastsitz nach Anspruch 1 oder Anspruch 2, **dadurch gekennzeichnet, dass** die Tischplatte (33) mit der Gelenkanordnung aus einer an dem Strukturbauteil (47, 48, 52, 53) herangeklappten Aufrecht-Stellung der Tischplatte (33) in eine an dem Strukturbauteil (47, 48, 52, 53) vorstehende Nutzstellung der Tischplatte (33) und zurück aus der Nutzstellung in die Aufrecht-Stellung schwenkbar ist, wobei die Einstellmittel (57) Neigungseinstellmittel (62) umfassen, welche für eine Einstellung der Neigung der Tischplatte (33) in der Nutzstellung der Tischplatte (33) ausgebildet sind.

4. Fluggastsitz nach einem der vorhergehenden Ansprüche, **dadurch gekennzeichnet, dass** die Einstellmittel (57) Höheneinstellmittel (60) umfassen, welche für eine Einstellung einer Höhen-Montageposition der Tischplatte (33) entlang einer vertikalen Verstellrichtung ausgestaltet sind.

5. Fluggastsitz nach einem der vorhergehenden Ansprüche, **dadurch gekennzeichnet, dass** die Einstellmittel (57) Seiteneinstellmittel (61) umfassen, welche für eine Einstellung einer Seiten-Montageposition der Tischplatte (33) entlang einer horizontalen Verstellrichtung ausgestaltet sind.

6. Fluggastsitz nach einem der vorhergehenden Ansprüche, **dadurch gekennzeichnet, dass** die Einstellmittel (57) eine Schraubverbindung umfassen mit einem durch ein Langloch (68,70, 73, 75) greifenden Schraubelement (67, 69, 72, 74), das in einen Gewindeabschnitt einschraubbar ist.

7. Fluggastsitz nach einem der vorhergehenden Ansprüche, **dadurch gekennzeichnet, dass** die Verbindungsanordnung (55, 56) mehrere Verbindungsbauteile umfasst, wobei ein erstes Verbindungsbauteil (64) an dem Strukturbauteil (47, 48, 52, 53) befestigt ist und das erste Verbindungsbauteil (64) mit einem zweiten Verbindungsbauteil (65) der Verbindungsanordnung (55, 56) verbunden ist.

8. Fluggastsitz nach einem der vorhergehenden Ansprüche, **dadurch gekennzeichnet, dass** das zweite Verbindungsbauteil (65) mit der Gelenkanordnung verbunden ist.

9. Fluggastsitz nach einem der vorhergehenden Ansprüche, **dadurch gekennzeichnet, dass** die Höheneinstellmittel (60) eine Schraubverbindung umfassen mit einem ersten Schraubelement (67), das durch ein erstes Langloch (68) greift und einem zweiten Schraubelement (69), das durch ein zweites Langloch (70) greift.

10. Fluggastsitz nach einem der vorhergehenden Ansprüche, **dadurch gekennzeichnet, dass** die Seiteneinstellmittel (61) eine Schraubverbindung umfassen mit einem ersten Schraubelement (72), das durch ein erstes Langloch (73) greift und einem zweiten Schraubelement (74), das durch ein zweites Langloch (75) greift.

11. Fluggastsitz nach einem der vorhergehenden Ansprüche, **dadurch gekennzeichnet, dass** die Neigungseinstellmittel (62) ein Schraubelement (76) umfassen, wobei durch Verdrehen des Schraubelements (76) eine Verstellung eines Teils der Gelenkanordnung um die von der Gelenkanordnung bereitgestellten Schwenkachse bedingt.

12. Fluggastsitz nach einem der vorhergehenden Ansprüche, **dadurch gekennzeichnet, dass** die gegenüberliegenden und horizontal beabstandeten Strukturbauteile im oberen Endbereich der Strukturbauteile ein Querelement umfassen, welche die beiden Strukturbauteile miteinander starr verbindet.

13. Sitzreihe (1) umfassend mehrere nebeneinander vorhandene Fluggastsitze (3, 4) gemäß einem der vorhergehenden Ansprüche.

## Claims

1. Aircraft passenger seat (3, 4) comprising a structural component (47, 48, 52, 53) on which a table top (33) of the aircraft passenger seat (3, 4) is held via a joint arrangement, wherein the table top (33) is pivotable about a pivot axis of the joint arrangement, wherein the aircraft passenger seat (3, 4) has a basic structure, wherein the basic structure is a mechanically supporting structure, wherein the basic structure has the structural component (47, 48, 52, 53), wherein the basic structure has two respectively elongate, plate-like, upright structural components which are present on both sides in the region of the extent of a backrest of the aircraft passenger seat, wherein the structural components have a sandwich structure in order to obtain high mechanical stability at a low weight, wherein a connecting arrangement (55, 56) for releasably attaching the table top (33) to the structural component (47, 48, 52, 53) is provided, wherein the connecting arrangement (55, 56) comprises adjustment means (57) for adjusting a mounting position of the table top (33) relative to the structural component (47, 48, 52, 53), wherein the adjustment means (57) are designed in such a manner that the mounting position can be selected from a plurality of different mounting positions of the table top (33) relative to the structural component (47, 48, 52, 53), wherein the table top (33) of the aircraft passenger seat (3, 4) is attached releasably to a first of the two structural components (47, 52) by a connecting arrangement (56) and releasably to a second of the two structural components (48, 53) by a further connecting arrangement (55).

2. Aircraft passenger seat according to Claim 1, **characterized in that** the adjustment means (57) are designed to establish the mounting position of the table top (33) along a first displacement direction (58) and in addition to establish the mounting position of the table top (33) along a second displacement direction (59), the first displacement direction (58) and the second displacement direction (59) being at an angle with respect to each other.

3. Aircraft passenger seat according to Claim 1 or Claim 2, **characterized in that** the table top (33) is pivotable with the joint arrangement from an upright position of the table top (33) folded up against the structural component (47, 48, 52, 53) into a use position of the table top (33) protruding on the structural component (47, 48, 52, 53) and back from the use position into the upright position, the adjustment means (57) comprising inclination adjustment means (62) which are designed for adjusting the inclination of the table top (33) in the use position of the table top (33).

4. Aircraft passenger seat according to one of the preceding claims, **characterized in that** the adjustment means (57) comprise height adjustment means (60) which are configured for adjusting a height mounting position of the table top (33) along a vertical displacement direction.

5. Aircraft passenger seat according to one of the preceding claims, **characterized in that** the adjustment means (57) comprise side adjustment means (61) which are configured for adjusting a side mounting position of the table top (33) along a horizontal displacement direction.

6. Aircraft passenger seat according to one of the preceding claims, **characterized in that** the adjustment means (57) comprise a screw connection with a screw element (67, 69, 72, 74) which reaches through an elongated hole (68, 70, 73, 75) and is screwable into a threaded section.

7. Aircraft passenger seat according to one of the preceding claims, **characterized in that** the connecting arrangement (55, 56) comprises a plurality of connecting components, a first connecting component (64) being fastened to the structural component (47, 48, 52, 53) and the first connecting component (64) being connected to a second connecting component (65) of the connecting arrangement (55, 56).

8. Aircraft passenger seat according to one of the preceding claims, **characterized in that** the second connecting component (65) is connected to the joint arrangement.

9. Aircraft passenger seat according to one of the preceding claims, **characterized in that** the height adjustment means (60) comprise a screw connection with a first screw element (67) which reaches through a first elongated hole (68) and with a second screw element (69) which reaches through a second elongated hole (70).

10. Aircraft passenger seat according to one of the preceding claims, **characterized in that** the side adjustment means (61) comprise a screw connection with a first screw element (72) which reaches through a first elongated hole (73) and with a second screw element (74) which reaches through a second elongated hole (75).

11. Aircraft passenger seat according to one of the preceding claims, **characterized in that** the inclination adjustment means (62) comprise a screw element (76), rotation of the screw element (76) causing a part of the joint arrangement to be displaced about the pivot axis provided by the joint arrangement.

12. Aircraft passenger seat according to one of the preceding claims, **characterized in that** the opposite and horizontally spaced-apart structural components comprise a transverse element in the upper end region of the structural components, which rigidly connects the two structural components to each other.

13. Seat row (1) comprising a plurality of aircraft passenger seats (3, 4) present next to one another according to one of the preceding claims.

## Revendications

1. Siège de passager d'aéronef (3, 4) comprenant un composant structural (47, 48, 52, 53) sur lequel un plateau de table (33) du siège de passager d'aéronef (3, 4) est reçu par l'intermédiaire d'un agencement d'articulation, le plateau de table (33) pouvant pivoter autour d'un axe de pivotement de l'agencement d'articulation, le siège de passager d'aéronef (3, 4) présentant une structure de base, la structure de base étant une structure mécaniquement porteuse, la structure de base présentant le composant structural (47, 48, 52, 53), la structure de base présentant deux composants structuraux verticaux allongés de type plaque, qui sont présents des deux côtés dans la zone de l'extension d'un dossier du siège de passager d'aéronef, les composants structuraux présentant une structure en sandwich afin d'obtenir une grande stabilité mécanique avec un poids faible, un agencement de liaison (55, 56) étant prévu pour la disposition amovible du plateau de table (33) sur le composant structural (47, 48, 52, 53), l'agencement de liaison (55, 56) comprenant des moyens de réglage (57) pour le réglage d'une position de montage du plateau de table (33) par rapport au composant structural (47, 48, 52, 53), les moyens de réglage (57) étant configurés de telle sorte que la position de montage peut être sélectionnée parmi une pluralité de positions de montage différentes du plateau de table (33) par rapport au composant structural (47, 48, 52, 53), le plateau de table (33) du siège de passager d'aéronef (3, 4) étant disposé de manière amovible sur un premier des deux composants structuraux (47, 52) par un agencement de liaison (56) et de manière amovible sur un deuxième des deux composants structuraux (48, 53) par un autre agencement de liaison (55).

2. Siège de passager d'aéronef selon la revendication 1, **caractérisé en ce que** les moyens de réglage (57) sont configurés pour établir la position de montage du plateau de table (33) le long d'une première direction de réglage (58) et pour établir en outre la position de montage du plateau de table (33) le long d'une deuxième direction de réglage (59), la première direction de réglage (58) et la deuxième direction de réglage (59) étant angulaires l'une par rapport à l'autre.

3. Siège de passager d'aéronef selon la revendication 1 ou la revendication 2, **caractérisé en ce que** le plateau de table (33) avec l'agencement d'articulation peut pivoter d'une position verticale du plateau de table (33) rabattu sur le composant structural (47, 48, 52, 53) vers une position d'utilisation horizontale du plateau de table (33) sur le composant structural (47, 48, 52, 53), 53) et en retour de la position d'utilisation à la position verticale, les moyens de réglage (57) comprenant des moyens de réglage de l'inclinaison (62) qui sont configurés pour régler l'inclinaison du plateau de table (33) dans la position d'utilisation du plateau de table (33) .

4. Siège de passager d'aéronef selon l'une quelconque des revendications précédentes, **caractérisé en ce que** les moyens de réglage (57) comprennent des moyens de réglage de la hauteur (60) configurés pour régler une position de montage en hauteur du plateau (33) le long d'une direction de réglage verticale.

5. Siège de passager d'aéronef selon l'une quelconque des revendications précédentes, **caractérisé en ce que** les moyens de réglage (57) comprennent des moyens de réglage latéraux (61) configurés pour régler une position de montage latérale du plateau de table (33) le long d'une direction de réglage horizontale.

6. Siège de passager d'aéronef selon l'une quelconque des revendications précédentes, **caractérisé en ce que** les moyens de réglage (57) comprennent une liaison par vis avec un élément de vis (67, 69, 72, 74) s'engageant à travers un trou oblong (68, 70, 73, 75), qui peut être vissé dans une section filetée.

7. Siège de passager d'aéronef selon l'une quelconque des revendications précédentes, **caractérisé en ce que** l'agencement de liaison (55, 56) comprend plusieurs composants de liaison, un premier composant de liaison (64) étant fixé au composant structural (47, 48, 52, 53) et le premier composant de liaison (64) étant relié à un deuxième composant de liaison (65) de l'agencement de liaison (55, 56) .

8. Siège de passager d'aéronef selon l'une quelconque des revendications précédentes, **caractérisé en ce que** le deuxième composant de liaison (65) est relié à l'agencement d'articulation.

9. Siège de passager d'aéronef selon l'une quelconque des revendications précédentes, **caractérisé en ce que** les moyens de réglage de la hauteur (60) comprennent une liaison par vis avec un premier élément de vis (67) qui s'engage à travers un premier trou oblong (68) et un deuxième élément de vis (69) qui s'engage à travers un deuxième trou oblong (70).

10. Siège de passager d'aéronef selon l'une quelconque des revendications précédentes, **caractérisé en ce que** les moyens de réglage latéraux (61) comprennent une liaison par vis avec un premier élément de vis (72) qui s'engage à travers un premier trou oblong (73) et un deuxième élément de vis (74) qui s'engage à travers un deuxième trou oblong (75).

11. Siège de passager d'aéronef selon l'une quelconque des revendications précédentes, **caractérisé en ce que** les moyens de réglage de l'inclinaison (62) comprennent un élément de vis (76), la rotation de l'élément de vis (76) entraînant un déplacement d'une partie de l'agencement d'articulation autour de l'axe de pivotement fourni par l'agencement d'articulation.

12. Siège de passager d'aéronef selon l'une quelconque des revendications précédentes, **caractérisé en ce que** les composants structuraux opposés et espacés horizontalement comprennent, dans la zone d'extrémité supérieure des composants structuraux, un élément transversal qui relie rigidement entre eux les deux composant structuraux.

13. Rangée de sièges (1) comprenant plusieurs sièges de passager d'aéronef (3, 4) selon l'une quelconque des revendications précédentes, présents les uns à côté des autres.
